# EUROPÄISCHE PATENTSCHRIFT

(11) **EP 3 762 271 B1**
(45) Veröffentlichungstag und Bekanntmachung des Hinweises auf die Patenterteilung: **06.11.2024**
(21) Anmeldenummer: 19709014.5
(22) Anmeldetag: 04.03.2019
(51) Int. Cl.: B60W 50/14, B60W 50/00, B60W 50/08, B60K 35/28, B60K 35/29

(54) **VERFAHREN ZUM BETRIEB EINES KRAFTFAHRZEUGS MIT EINEM AUTOPILOTSYSTEM UND KRAFTFAHRZEUG**
METHOD FOR OPERATING A MOTOR VEHICLE HAVING AN AUTOPILOT SYSTEM, AND MOTOR VEHICLE
PROCÉDÉ PERMETTANT DE FAIRE FONCTIONNER UN VÉHICULE AUTOMOBILE MUNI D'UN SYSTÈME DE PILOTAGE AUTOMATIQUE ET VÉHICULE AUTOMOBILE

(30) Priorität: 07.03.2018 DE 102018203426
(43) Veröffentlichungstag der Anmeldung: 13.01.2021
(73) Patentinhaber: Audi AG, 85045 Ingolstadt (DE)
(72) Erfinder: LIMBACHER, Reimund, 85055 Ingolstadt (DE); LEPCZYK, Daniel, 86529 Schrobenhausen (DE)
(86) Internationale Anmeldenummer: PCT/EP2019/055263
(87) Internationale Veröffentlichungsnummer: WO 2019/170576

(56) Entgegenhaltungen:
- DE-A1- 102013 008 605
- DE-A1- 102015 004 469
- US-A1- 2014 156 133
- US-B1- 9 188 985

## Beschreibung

Die Erfindung betrifft ein Verfahren zum Betrieb eines Kraftfahrzeugs, welches ein zur vollständig automatischen Führung des Kraftfahrzeugs ausgebildetes Autopilotsystem aufweist, zu dem in Abhängigkeit einer aktuellen und/oder vorausliegenden, durch Fahrsituationsdaten und/oder Betriebszustandsdaten des Kraftfahrzeugs beschriebenen Betriebssituation und einer den Einsatzbereich des Autopilotsystems beschreibenden Systemgrenzeninformation eine technische Aktivierbarkeitsinformation ermittelt wird, wobei das Kraftfahrzeug ferner eine Anzeigeeinrichtung mit einem die Aktivierbarkeit des Autopilotsystems gemäß der technischen Aktivierbarkeitsinformation anzeigenden, ersten Ausgabeelement aufweist. Daneben betrifft die Erfindung ein Kraftfahrzeug.

Systeme zur teilweise und insbesondere vollständig automatischen Führung eines Kraftfahrzeugs sind ein wichtiger Forschungsgegenstand zur weiteren Assistenz für Fahrer. Dabei wurden bereits verschiedene pilotierte Fahrfunktionen für straßengebundene Kraftfahrzeuge vorgeschlagen, die durch Autopilotsysteme, die zur vollständig automatischen Führung des Kraftfahrzeugs ausgebildet sind, bereitgestellt werden können. Ein Beispiel hierfür ist der sogenannte "Staupilot", der in Betriebssituationen langsamen Verkehrs die Fahrzeugführung vollständig übernehmen kann. Andere derartige Fahrfunktionen umfassen beispielsweise einen Autobahnpiloten und eine Stadtpiloten.

Derartige pilotierte Fahrfunktionen beziehungsweise Autopilotsysteme lassen sich nicht in allen Betriebssituationen, in denen sich ein Kraftfahrzeug befinden kann, aktivieren, nachdem sich beispielsweise ein Staupilot auf Stausituationen und ein Autobahnpilot auf Autobahnen mit jeweils entsprechenden Geschwindigkeitsbereichen beschränken soll. Die Einsatzbereiche solcher Autopilotsysteme sind mithin durch Systemgrenzen beschrieben, die durch eine entsprechende Systemgrenzeninformation hinterlegt werden können.

Beispielsweise existieren beim Staupilot auslegungsbedingt verschiedene technische Aktivierungsverhinderungsgründe, unter anderem, dass kein Vorausfahrzeug erkannt wurde, dass keine Spurmarkierungen erkannt wurden, dass das Vorausfahrzeug schneller als 60 km/h fährt, dass eine falsche Straßenklasse vorliegt (keine Autobahn), dass Fußgänger im Umfeld erkannt wurden, dass eine Mautstation voraus liegt und dergleichen.

Um zu vermeiden, dass der Fahrer versucht, ein Autopilotsystem zu aktivieren, obwohl dem technische Hinderungsgründe aufgrund seiner Systemgrenzen entgegenstehen, wurde vorgeschlagen, anhand der aktuellen und/oder vorausliegenden, durch Fahrsituationsdaten und/oder Betriebszustandsdaten des Kraftfahrzeugs beschriebenen Betriebssituation und der Systemgrenzeninformation eine technische Aktivierbarkeitsinformation zu ermitteln, die auf einer Anzeigeeinrichtung des Kraftfahrzeugs, ein Ausgabeelement nutzend, ausgegeben werden kann. Dem Fahrer wird dabei insbesondere angezeigt, dass ein Zustand erreicht ist, in dem kein technischer Aktivierungsverhinderungsgrund vorliegt. Dies kann beispielsweise durch eine Texteinblendung "Staupilot: verfügbar", ein hinterleuchtetes Symbol oder dergleichen erfolgen.

WO 2015/049231 A1 betrifft ein Verfahren für ein Fahrerassistenzsystem eines Fahrzeugs, welches ausgestaltet sein soll, das Fahrzeug zumindest teilweise automatisch zu steuern. Dabei wird ein Beginn eines Autopilotstreckenabschnitts in einem für das Fahrzeug geplanten Streckenverlauf bestimmt, entlang dem das Fahrerassistenzsystem das Fahrzeug automatisch steuern kann. Ein Abstand zwischen der aktuellen Position des Fahrzeugs und dem Beginn des Autopilotstreckenabschnitts wird bestimmt und in dem Fahrzeug ausgegeben, wobei dieser Abstand als Kilometerangabe, als graphische Darstellung des geplanten Streckenverlaufs oder aber auch als Zeit bis zum Erreichen des Autopilotstreckenabschnitt ausgegeben werden kann. In einem Kombiinstrument wird angezeigt, ob und für wie lange die Autopilotfunktion verfügbar ist. Das bedeutet, in dieser Druckschrift wird eine technische Aktivierbarkeitsinformation auch für die Zukunft bestimmt.

DE 10 2014 221 132 A1 betrifft ein Verfahren und eine Vorrichtung zum Anzeigen einer Verfügbarkeit eines ersten Fahrmodus eines Fahrzeugs. In dem ersten Fahrmodus wird das Fahrzeug zumindest teilweise automatisch geführt. Aus Umgebungsdaten der Umgebung des Fahrzeugs wird ein Beginn eines Streckenabschnitts prognostiziert, ab dem der erste Fahrmodus verfügbar ist. Der prognostizierte Beginn des Streckenabschnitts wird auf einem Anzeigeelement dargestellt, wobei zudem der prognostizierte Beginn und/oder das prognostizierte Ende des Streckenabschnitts angegeben werden können.

EP 2 531 814 B1 betrifft ein Fahrerassistenzsystem und ein Verfahren zur Fahrerassistenz, worin anhand der Komplexität eines vorausliegenden Streckenabschnitts überprüft wird, ob eine weitgehend automatische Fahrzeugführung möglich ist, so dass der Fahrer einer Tertiäraufgabe beziehungsweise Tertiärtätigkeit nachgehen kann.

US 2014/0156133 A1 betrifft das Hin-und Herschalten zwischen einem autonomen und einem manuellen Modus. Nach einer Anfrage des Fahrers in den autonomen Modus zu wechseln, wird ein Vielzahl von Überprüfungen durchgeführt und wenn vorbestimmte Bedingungen erfüllt sind, wird in den autonomen Modus gewechselt, Derartige technische Verfügbarkeitsanzeigen für Autopilotsysteme weisen diverse Nachteile auf. So werden, insbesondere bei auf der aktuellen Betriebssituation basierenden Aktivierbarkeitsinformationen, häufig wechselnde Verfügbarkeitsanzeigen ausgegeben, so dass die Gefahr besteht, dass der Fahrer die Anzeige ab einem bestimmten Zeitpunkt nicht mehr beachtet. Ohnehin sind derartige Verfügbarkeitsanzeigen oft nur von kurzer Dauer, so dass eine sinnvolle Nutzung der pilotierten Fahrfunktion schlecht für den Fahrer vorhersehbar ist, wobei hier allerdings die eingangs zitierten, die Dauer der Verfügbarkeit anzeigenden Vorschläge nützlich sein können.

Ein weiterer Nachteil der Verfügbarkeitsanzeige aufgrund einer Aktivierbarkeitsinformation ist, dass diese auch zu Zeitpunkten ausgegeben wird, in denen der Fahrer keinerlei Interesse daran hat, die pilotierte Fahrfunktion des Autopilotsystems zu nutzen. In anderen Betriebssituationen wiederum wird keine Verfügbarkeit angezeigt, obwohl eine Nutzung der pilotierten Fahrfunktion gerade gewünscht und durch leicht geänderte Fahrweise auch möglich wäre.

Der Erfindung liegt daher die Aufgabe zugrunde, ein verbessertes Anzeigekonzept für pilotierte Fahrfunktionen eines Autopilotsystems in Kraftfahrzeugen anzugeben.

Zur Lösung dieser Aufgabe ist bei einem Verfahren der eingangs genannten Art erfindungsgemäß vorgesehen, dass zusätzlich zu der technischen Aktivierbarkeitsinformation in Abhängigkeit von der Betriebssituation und von Vorlieben bezüglich des Autopilotsystems und/oder den Zustand des Fahrers bezüglich der Fahrzeugführung beschreibenden Fahrerdaten eine fahrerbezogene Empfehlungsinformation ermittelt wird, in deren Abhängigkeit ein zweites, eine Aktivierungsempfehlung gemäß der Empfehlungsinformation anzeigendes Ausgabeelement der Anzeigeeinrichtung angesteuert wird, wobei
die Aktivierbarkeitsinformation und die Empfehlungsinformation parallel zyklisch ermittelt und aktualisiert werden.

Es wird mithin vorgeschlagen, neben der technischen Aktivierbarkeitsinformation auch eine fahrerbezogene Empfehlungsinformation zu ermitteln, die wenigstens eine Aktivierungsempfehlung für die pilotierte Fahrfunktion beziehungsweise eine Deaktivierungsempfehlung für die pilotierte Fahrfunktion beschreibt. Diese kann über wenigstens ein entsprechendes, zweites Ausgabeelement der Anzeigeeinrichtung zusätzlich zu der technischen Aktivierbarkeitsinformation dargestellt werden. Das bedeutet, es wird zwischen technischen Verfügbarkeitskriterien, beschrieben durch die Systemgrenzeninformation, und ergänzenden, fahrerbezogenen und situationsspezifischen Kriterien differenziert, um eine Anzeige der Verfügbarkeit auch in Abhängigkeit der situativ sinnvollen Eignung zu ermöglichen. Auf diese Weise können beispielsweise visuelle und/oder akustische Aktivierungsempfehlungen bzw. Deaktivierungsempfehlungen in besonders nutzbringenden Situationen verfügbar und ausgebbar gemacht werden.

Ergebnis ist eine mehrstufige Verfügbarkeitsanzeige mit zusätzlichen Nutzungsempfehlungen für die pilotierte Fahrfunktion des Autopilotsystems, wobei letztlich neben die Betriebssituation beschreibenden Betriebszustandsdaten und Fahrsituationsdaten für die technische Aktivierbarkeitsinformation die Systemgrenzeninformation und für die fahrerbezogene Empfehlungsinformation situative Informationen zum aktuellen Fahrerzustand beziehungsweise zum bisherigen Nutzungsverhalten des Fahrers oder anderer Fahrer in vergleichbaren Situationen zusammengeführt werden.

Dabei ist es zweckmäßig, wenn eine Aktivierungsempfehlung nur für Streckenabschnitte angezeigt wird, für die gemäß der Aktivierbarkeitsinformation der Einsatzbereich des Autopilotsystems vorliegt. Das bedeutet, eine Aktivierungsempfehlung wird nur dann ausgegeben, wenn die pilotierte Fahrfunktion des Autopilotsystems auch aktivierbar ist, so dass es nicht zu einer Verwirrung des Fahrers kommt. Entsprechend kann vorgesehen sein, dass eine Deaktivierungsempfehlung nur ausgegeben wird, wenn die pilotierte Fahrfunktion des Autopilotsystems auch aktiv ist.

Besonders bevorzugt werden als Fahrsituationsdaten und/oder Betriebszustandsdaten auf einen vorausliegenden Streckenabschnitt bezogene Prädiktionsdaten verwendet, insbesondere prädiktive Streckendaten. Auf diese Weise kann auch für vor dem Kraftfahrzeug liegende Streckenabschnitte eine technische Aktivierbarkeitsinformation und eine fahrerbezogene Empfehlungsinformation ermittelt werden, wobei derartige prädiktive Streckendaten aus verschiedenen Quellen erhalten werden können. So ist es beispielsweise denkbar, prädiktive Streckendaten zumindest teilweise aus einem Navigationssystem des Kraftfahrzeugs zu erhalten, sei es durch Analyse der aktuell befahrenen Straße und/oder aufgrund einer ohnehin vorgegebenen Route, der das Kraftfahrzeug folgt, wobei auch zusätzlich Historiendaten über bevorzugte Fahrwege/Routen des Fahrers herangezogen werden können, um den zukünftigen Weg des Kraftfahrzeugs vorauszusagen, falls keine festgelegte Route vorliegt. Die Nutzung von digitalem Kartenmaterial eines Navigationssystems hat den besonderen Vorteil, dass den darin verzeichneten Streckenabschnitten beziehungsweise Streckensegmenten Zusatzinformationen beziehungsweise Attribute zugeordnet sein können, aus denen gemeinsam mit der Systemgrenzeninformation und den Fahrerdaten entsprechende Rückschlüsse zur Ermittlung der technischen Aktivierbarkeitsinformation beziehungsweise der fahrerbezogenen Empfehlungsinformation gezogen werden können. Derartige Zusatzinformationen lassen sich jedoch auch ermitteln, wenn zumindest teilweise die prädiktiven Streckendaten aus Sensordaten von Umgebungssensoren des Kraftfahrzeugs abgeleitet werden, beispielsweise umfassend die Sensordaten einer auf das Vorfeld des Kraftfahrzeugs gerichteten Kamera. Aus derartigen Sensordaten kann nicht nur der zukünftige Streckenverlauf abgeleitet werden, sondern es ist auch denkbar, Zusatzinformationen zu diesem zukünftigen Streckenverlauf zu erhalten. Dabei werden besonders bevorzugt prädiktive Streckendaten des Navigationssystems und prädiktive Streckendaten, die aus Sensordaten des Kraftfahrzeugs abgeleitet wurden, zusammengeführt, um aktuelle Zusatzinformationen zu vorausliegenden Streckenabschnitten zu erhalten. Weitere Quellen für Zusatzinformationen zu aktuell befahrenen und/oder vorausliegenden Streckenabschnitten stellen im Übrigen auch Verkehrsinformationen dar, die beispielsweise über Radiosender und/oder das Internet bereitgestellt werden können. Schließlich sind als nützliche Fahrsituationsdaten, die die Betriebssituation beschreiben, noch Wetterinformationen zu nennen, die ebenso aus Sensordaten von Umgebungssensoren des Kraftfahrzeugs und/oder über entsprechende Kommunikationsverbindungen, insbesondere das Internet, erhalten werden können. Betriebszustandsdaten des Kraftfahrzeugs können beispielsweise von Betriebssensoren und/oder aus anderen Informationsquellen innerhalb des Kraftfahrzeugs, insbesondere von Steuergeräten, erhalten werden, und neben aktuellen Dynamikinformationen des Kraftfahrzeugs selbstverständlich auch zur Zeit aktive Fahrzeugsysteme und deren Parameter sowie sonstige Steuerinformationen umfassen.

Möglichkeiten zur Ermittlung der technischen Aktivierbarkeitsinformation, insbesondere auch für vorausliegende Streckenabschnitte, sind im Stand der Technik, wie eingangs auch beispielhaft gezeigt, grundsätzlich bekannt und können auch im Rahmen der vorliegenden Erfindung eingesetzt werden. Dabei kann zur Ermittlung der technischen Aktivierbarkeitsinformation beispielsweise ein Abgleich mit entsprechenden Systemgrenzeninformationen erfolgen, beispielsweise was die Geschwindigkeit des Kraftfahrzeugs und einen erlaubten Geschwindigkeitsbereich der pilotierten Fahrfunktion des Autopilotsystems angeht. Selbstverständlich sind jedoch auch komplexere Kriterien und/oder Auswertungen denkbar, beispielsweise hinsichtlich der Komplexität der Fahrsituation.

Die Fahrerdaten können bevorzugt fahrerspezifisch oder zumindest kraftfahrzeugspezifisch sein, was die die Vorlieben des Fahrers beschreibenden Fahrerdaten angeht. Dabei kann konkret vorgesehen sein, dass der Fahrer zu Beginn der Fahrt identifiziert wird, beispielsweise anhand eines fahrerspezifischen Schlüssels, anhand von biometrischen Daten und/oder anhand einer Benutzereingabe. Dem Fahrer kann dann ein Fahrerprofil mit entsprechenden Fahrerdaten, was die Vorlieben des Fahrers bezüglich der pilotierten Fahrfunktion des Autopilotsystems angeht, zugeordnet und entsprechend gespeichert werden. Entsprechende Möglichkeiten sind im Stand der Technik vielfältig beschrieben worden, beispielsweise, was die Einstellung von Sicherheitssystemen und/oder Fahrdynamiksystemen auf einen aktuellen Fahrer angeht.

In einer vorteilhaften Weiterbildung der vorliegenden Erfindung kann vorgesehen sein, dass die Aktivierbarkeitsinformation und/oder die Empfehlungsinformation wenigstens eine Zeitinformation umfassend ermittelt werden, insbesondere eine einen Aktivierbarkeitsbeginn und/oder ein Ende des Einsatzbereichs bzw. einen Zeitpunkt/Ort einer Empfehlung beschreibende Zeitinformationen. Dabei sei darauf hingewiesen, dass es sich bei der Zeitinformation durchaus auch um eine räumliche Information, beispielsweise eine Entfernung oder Ortsangabe, handeln kann, die sich entsprechend, wie in den eingangs zitierten Druckschriften dargestellt, in eine Zeitangabe (und umgekehrt) umrechnen lässt, so dass beispielsweise, wenn die Länge eines Streckenabschnitts, auf dem die pilotierte Fahrfunktion eingesetzt werden kann, bekannt ist, abgeschätzt werden kann, für wie lange die pilotierte Fahrfunktion voraussichtlich aktiv sein kann. Auf diese Weise wird ein relevantes Zusatzwissen, insbesondere unter Verwendung von prädiktiven Streckendaten, erzeugt und bevorzugt auch an den Fahrer weitergegeben.

Entsprechend ist es bevorzugt, wenn die Zeitinformation und/oder eine daraus abgeleitete Ausgabeinformation, insbesondere eine voraussichtliche Erstreckung des Einsatzbereichs und/oder eine Dauer bis zu einer Aktivierbarkeit und/oder Aktivierungsempfehlung und/oder Deaktivierungsempfehlung, mittels der Anzeigeeinrichtung ausgegeben wird. Beispielsweise kann bezüglich der technischen Aktivierbarkeitsinformation neben einem Symbol und/oder Text, das bzw. der für die grundsätzliche technische Aktivierbarkeit steht, eine entsprechende Zeitinformation beziehungsweise daraus abgeleitete Ausgabeinformation angezeigt werden, beispielsweise der Art "Autopilot verfügbar: in 10 Minuten" oder "Autopilot verfügbar: für 17 km". Entsprechendes kann hinsichtlich der Empfehlungsinformation vorgesehen sein, so dass dort beispielsweise eine Anzeige der Art erfolgen kann: "Aktivierung des Autopiloten empfohlen. Die sinnvolle Nutzungszeit beträgt 10 Minuten/20 km." Besonders zweckmäßig ist dabei eine Autopilot-Restfahrzeitanzeige, wobei im Übrigen auch, insbesondere bei einer Abschätzung, die Zeitinformation und/oder die Ausgabeinformation als ein Intervall erfolgen kann, beispielsweise als "2 - 3 Minuten".

In der Empfehlungsinformation kann mit besonderem Vorteil einer Aktivierungsempfehlung und/oder einer Deaktivierungsempfehlung auch ein Empfehlungsgrad zugeordnet sein, der es ermöglicht, die entsprechende Empfehlung einer Empfehlungsstufe zuzuordnen, so dass auch die Ausgabe von Aktivierungsempfehlungen und Deaktivierungsempfehlungen zweckmäßigerweise gestuft erfolgen kann. Dabei ist in besonders bevorzugter Ausgestaltung mithin vorgesehen, dass die Empfehlungsinformation wenigstens eine einen Empfehlungsgrad beschreibende Empfehlungsstufe umfasst, in deren Abhängigkeit die Ausgabe der Aktivierungsempfehlung angepasst wird, insbesondere unterschiedlichen Empfehlungsstufen jeweils unterschiedliche zweite Ausgabeelemente und/oder Ausgabesteuerparameter zugeordnet sind. In zweckmäßiger konkreter Ausgestaltung kann dabei einer aufgrund einer fahrerbezogenen Eignung eines Streckenabschnitts ermittelte, streckenabschnittsbezogene Aktivierungsempfehlung ein geringerer Empfehlungsgrad zugeordnet werden als einer auf eine aktuelle Tätigkeit und/oder einer auf einen aktuellen Zustand des Fahrers bezogenen aktualitätsbezogenen Aktivierungsempfehlung. Aktualitätsbezogene Aktivierungsempfehlungen werden dabei bevorzugt deutlicher wahrnehmbar und/oder kurzzeitiger ausgebeben, da sie sich auf eine aktuelle Information, insbesondere ein aktuelles Ereignis, beziehen. Dabei können selbstverständlich auch zwei Aktivierungsempfehlungen und/oder Deaktivierungsempfehlungen unterschiedlicher Empfehlungsstufen gleichzeitig vorliegen. Hierbei kann beispielsweise die Empfehlung niedrigeren Empfehlungsgrads dauerhaft auf einem zweiten Ausgabeelement wiedergegeben werden und die Empfehlung höheren Empfehlungsgrades kurzzeitig über ein weiteres zweites Ausgabeelement, beispielsweise ein akustisches Ausgabemittel. Dies ist insbesondere zweckmäßig bei aktualitätsbezogenen Empfehlungen, da sich jene gegebenenfalls auf einen vorübergehenden Zustand beziehen.

In einer vorteilhaften Weiterbildung der Erfindung kann vorgesehen sein, dass die Anzeige einer Aktivierungsempfehlung und/oder einer Deaktivierungsempfehlung wenigstens zu Beginn eines Streckenabschnitts, auf den sie bezogen ist, erfolgt. Das bedeutet, eine Aktivierungsempfehlung und eine Deaktivierungsempfehlung können in einem sinnvollen Kontext unmittelbar und intuitiv verständlich für den Fahrer ausgegeben werden, wobei bei einer in diesem Fall zusätzlichen vorankündigenden und/oder dauerhaften Anzeige einer Aktivierungsempfehlung und/oder Deaktivierungsempfehlung die Ausgabe zu Beginn des entsprechenden Streckenabschnitts durch eine Hervorhebung dieser bereits vorhandenen Ausgabe, beispielsweise ein blinkendes Übergehen einer Vorankündigung in eine bleibende Aktivierungsempfehlung für den Streckenabschnitt, und/oder durch eine zusätzliche Ausgabe erfolgen kann. Zusätzlich zu einer solchen Stufung innerhalb einer Aktivierungsempfehlung und/oder Deaktivierungsempfehlung kann jedoch bei unterschiedlichen Empfehlungsstufen auch eine Empfehlung niedrigeren Empfehlungsgrades dauerhaft ausgegeben werden, während die Empfehlung höheren Empfehlungsgrades, insbesondere eine aktualitätsbezogene Empfehlung, kurzzeitig zu Beginn des Streckenabschnitts zusätzlich, insbesondere auffälliger, gegeben werden kann.

Dabei wird, wie bereits erwähnt, eine Ausgabe einer Aktivierungsempfehlung und/oder einer Deaktivierungsempfehlung über das zweite Ausgabeelement bevorzugt nur dann erzeugt, wenn auch die technischen Aktivierbarkeitskriterien erfüllt sind. Dies führt dann dazu, dass neben der Anzeige der technischen Aktivierbarkeit eine zusätzliche Ausgabe erfolgt, wenn Indizien dafür vorliegen, das in der aktuellen Betriebssituation eine pilotierte Fahrfunktion für den aktuellen Fahrer auch gewünscht beziehungsweise sinnvoll nutzbar wäre.

Insbesondere kann also bei Erreichen eines fahrerbezogen situativsinnvollen Aktivierungszustands die Aktivierungsempfehlung und umgekehrt die Deaktivierungsempfehlung ausgegeben werden. Dabei ist es im Übrigen bevorzugt, wenn die Anzeige einer, insbesondere aktualitätsbezogenen, Aktivierungsempfehlung begrenzt auf einen vorbestimmten Zeitraum, beispielsweise 5 s, ausgegeben wird. Auf diese Weise wird die Aufmerksamkeit des Fahrers zu Beginn des Streckenabschnitts erregt, auf dem die Aktivierung insgesamt sinnvoll ist, er wird jedoch durch die Anzeige nicht weiter abgelenkt. Dies erfolgt bevorzugt bei Empfehlungen höheren Empfehlungsgrades.

Eine besonders vorteilhafte Ausgestaltung der Erfindung sieht vor, dass das zweite Ausgabeelement ein akustisches Ausgabemittel umfasst, über das die Aktivierungsempfehlung akustisch ausgegeben wird. Insbesondere sind hierbei eine optische und zusätzlich eine akustische Ausgabe denkbar. Sobald also Indizien dafür sprechen, dass in der aktuellen Betriebssituation die pilotierte Fahrfunktion für den aktuellen Fahrer ganz besonders nutzbringend wäre und/oder die pilotierte Fahrfunktion besser deaktiviert würde, kann ein akustischer Hinweis durch eine Sprachausgabe gegeben werden, beispielsweise der Art "Möchten Sie den Autobahnpilot jetzt einschalten?". Dies ist besonders zweckmäßig, wenn auch eine Hintergrundinformation, wie im Folgenden noch genauer dargelegt, ausgegeben werden soll, da dann ein scheinbar verständiger, mitdenkender Gesprächspartner simuliert wird. In einer konkreten Ausgestaltung kann einer kontinuierlich optisch ausgegebenen Aktivierungsempfehlung niedrigeren Empfehlungsgrades zusätzlich eine wenigstens akustisch und/oder auffälliger auszugebende Empfehlung höheren Empfehlungsgrades, insbesondere kurzzeitig, hinzugefügt werden.

In diesem Kontext ist es auch besonders vorteilhaft, wenn bei einer akustischen Ausgabe eine Antwort des Fahrers mit einem akustischen Aufnahmemittel erfasst und zur Ableitung einer Steuerinformation für das Autopilotsystem, insbesondere zum Aktivieren oder Deaktivieren des Autopilotsystems, verwendet wird. Während es selbstverständlich weiterhin möglich sein kann, die pilotierte Fahrfunktion über entsprechende manuell zu betätigende Bedienmittel vorzusehen, ist es besonders bevorzugt, wenn eine Sprachausgabe für eine Aktivierungsempfehlung oder eine Deaktivierungsempfehlung erfolgt, auch eine sprachliche Antwort des Fahrers über ein geeignetes Aufnahmemittel beispielsweise ein Innenraummikrofon, das in einer Freisprechanlage vorhanden sein kann, entgegenzunehmen, um einen entsprechenden Aktivierungswunsch des Fahrers möglichst einfach eingebbar zu machen. Umfasst die Sprachausgabe beispielsweise "Möchten Sie die pilotierte Fahrfunktion nun aktivieren?", so kann als Antwort des Fahrers ein "ja" zur Erzeugung einer entsprechenden aktivierenden Steuerinformation und zur Verwendung derselben in dem Autopilotsystem führen.

In einer besonders bevorzugten Ausgestaltung des erfindungsgemäßen Verfahrens kann bei einer keine Aktivierbarkeit anzeigenden Aktivierbarkeitsinformation, aber einer eine Aktivierungsempfehlung anzeigenden Empfehlungsinformation durch Auswertung der Betriebssituation überprüft werden, ob wenigstens ein empfehlbarer Fahreingriff des Fahrers zur Herstellung der Aktivierbarkeit führt, wobei bei ermittelbarem empfehlbaren Fahreingriff eine diesen beschreibende Fahrerinformation über das zweite Ausgabeelement und/oder ein weiteres Ausgabeelement ausgegeben wird. Dabei kann der wenigstens eine Fahreingriff insbesondere einen Spurwechsel und/oder den Wechsel einer Straßenklasse und/oder eine Geschwindigkeitsänderung, insbesondere -reduzierung, betreffen, wobei insbesondere im Falle eines Straßenklassenwechsels mittels eines Navigationssystems des Kraftfahrzeugs eine die Ziel-Straßenklasse umfassende Route ermittelt und empfohlen wird. Eine derartige Ausgestaltung kann sich auch an Empfehlungsstufen orientieren, so dass beispielsweise eine solche Überprüfung auf empfehlbare Fahreingriffe nur bei Aktivierungsempfehlungen höheren Empfehlungsgrades durchgeführt wird. Beschreibt beispielsweise die Systemgrenzeninformation die Nutzung der pilotierten Fahrfunktion nur auf bestimmten Fahrspuren einer Straße und bewegt sich das Kraftfahrzeug auf einer entsprechend unzulässigen Fahrspur, so dass die technische Aktivierbarkeitsinformation anzeigt, dass die pilotierte Fahrfunktion nicht aktivierbar ist, kann, insbesondere akustisch und/oder optisch als Text und/oder als Grafik ein entsprechender Hinweis als Empfehlungsinformation ausgegeben werden, beispielsweise: "Um den Autobahnpilot zu aktivieren, bitte zuerst auf die rechte Fahrspur wechseln". Ähnliches gilt für für die pilotierte Fahrfunktion nicht zulässige Straßenklassen, so dass beispielsweise auf einer Landstraße eine Aktivierung eines Autobahnpiloten als pilotierte Fahrfunktion nicht möglich ist. Hier kann ebenso ein Hinweis ausgegeben werden, beispielsweise "Um den Autobahnpiloten zu aktivieren, wählen sie bitte eine alternative Route über die Autobahn". Dabei kann in besonders bevorzugter Ausgestaltung ein Zusammenwirken mit dem Navigationssystem des Kraftfahrzeugs erfolgen, welches beispielsweise eine Alternativroute unter Nutzung der zulässigen Straßenklasse, z. B. der Autobahn, ermitteln und vorschlagen kann.

Ein weiteres Beispiel für eine Empfehlungsinformation ist gegeben, wenn das Kraftfahrzeug aktuell eine Maximalgeschwindigkeit für die Nutzung der pilotierten Fahrfunktion gemäß Systemgrenzeninformationen überschreitet, beispielsweise bei einem Autopiloten schneller als 130 km/h fährt. Hier kann beispielsweise ein Hinweis der Art "Um den Autobahnpiloten zu aktivieren, reduzieren Sie bitte zunächst die Fahrgeschwindigkeit unter 130 km/h" ausgegeben werden.

Eine besonders vorteilhafte Ausführungsform ergibt sich ferner, wenn die Empfehlungsinformation eine den Grund für eine Aktivierungsempfehlung und/oder eine Deaktivierungsempfehlung beschreibende Hintergrundinformation umfassend ermittelt wird und die Hintergrundinformation mit der jeweiligen Empfehlung ausgegeben wird. Mithin kann der Grund für die Empfehlungshinweise mit angegeben werden, beispielsweise der Art "Sie könnten damit Ihre E-Mails bequem und sicher bearbeiten" oder "In Kürze fahren wir in einen Tunnel ein". Auf diese Weise wird für den Fahrer leicht verständlich ausgegeben, warum ausgerechnet jetzt eine Aktivierungsempfehlung beziehungsweise Deaktivierungsempfehlung gegeben wird. Beim Fahrer kann damit eine Art "Aha-Effekt" erreicht werden und er erhält den Eindruck, dass das Autopilotsystem sozusagen "mitdenkt".

Zur konkreten Ermittlung der Empfehlungsinformation sind eine Mehrzahl von Ausgestaltungen denkbar, die besonders vorteilhaft zusätzlich zueinander realisiert und eingesetzt werden können, um möglichst genau für den insbesondere aktuellen Fahrer entscheiden zu können, wie situativ-sinnvoll die Nutzung der pilotierten Fahrfunktion für den Fahrer aktuell wäre.

In einer ersten konkreten Ausgestaltung kann vorgesehen sein, dass die Empfehlungsinformation durch Auswertung von das Fahrerverhalten in der Vergangenheit beschreibenden Historiendaten ermittelt wird. Das bedeutet, es wird analysiert, wie sich insbesondere der aktuelle, gegebenenfalls jedoch auch andere Fahrer, in der Vergangenheit bezüglich des Autopilotsystems in verschiedenen Betriebssituationen verhalten haben, wobei derartige Historiendaten nicht zwangsläufig auf das eigene Kraftfahrzeug beschränkt sein müssen, wohl aber können. Auf diese Weise kann sich insbesondere bei Bezug auf den aktuellen Fahrer das hier beschriebene System sozusagen auf den Fahrer einstellen und dessen Vorlieben bezüglich des Autopilotsystems und seiner pilotierten Fahrfunktion antizipieren. Entsprechende Historiendaten können beispielsweise innerhalb des Kraftfahrzeugs selbst gesammelt werden, indem Aktivierungs- und Deaktivierungsereignisse gesammelt werden, insbesondere auch in Reaktion auf ausgegebene Aktivierungs- und Deaktivierungsempfehlungen.

Konkret kann beispielsweise vorgesehen sein, dass eine zu analysierende Betriebssituation wenigstens einer Betriebssituationsklasse zugeordnet wird, für die ein Vorzugsverhalten des Fahrers anzeigende Historiendaten vorliegen, welche zur Ermittlung der Empfehlungsinformation verwendet werden. Das bedeutet, Betriebssituationen können zu Betriebssituationsklassen zusammengefasst werden, beispielsweise "Fahrt durch einen Tunnel auf einer Autobahn" und dergleichen. Durch Betrachtung des Fahrerverhaltens in der Vergangenheit, insbesondere auch durch Nutzung statistischer Methoden, können Vorlieben für die verschiedenen Betriebssituationsklassen ermittelt und zur Ermittlung der Empfehlungsinformation genutzt werden. Dabei sind auch Ausgestaltungen denkbar, in denen eine Betriebssituation unterschiedlichen Betriebssituationsklassen zuordenbar ist und die Vorzugsverhalten, gegebenenfalls gewichtet, zusammengeführt werden, um eine Empfehlungsinformation zu ermitteln.

Im konkreten Beispiel kann vorgesehen sein, dass wenigstens eine Betriebssituationsklasse Streckenabschnitte, auf denen der Fahrer in der Vergangenheit das Autopilotsystem genutzt oder deaktiviert hat, und/oder Streckenmerkmale und/oder Umgebungsmerkmale, bei denen der Fahrer in der Vergangenheit das Autopilotsystem aktiviert oder deaktiviert hat, und/oder Zeiträume, in denen der Fahrer in der Vergangenheit das Autopilotsystem aktiviert oder deaktiviert hat, und/oder eine Personenanzahl im Kraftfahrzeug, bei der der Fahrer in der Vergangenheit das Autopilotsystem aktiviert oder deaktiviert hat, und/oder eine Fahrspur, auf der der Fahrer in der Vergangenheit das Autopilotsystem aktiviert oder deaktiviert hat, beschreibt.

Liegt beispielsweise eine aktuell befahrene Strecke vor, auf der die technische Aktivierbarkeitsinformation anzeigt, dass eine Nutzung der pilotierten Fahrfunktion des Autopilotsystems technisch möglich ist, kann dennoch durch Analyse der Historiendaten festgestellt werden, dass die Nutzung der pilotierten Fahrfunktion eher unerwünscht ist. Beispielsweise kann dabei analysiert worden sein, dass der Fahrer in entsprechenden Betriebssituationen die pilotierte Fahrfunktion bewusst mehrmals deaktiviert hat, beispielsweise bei Tunneldurchfahrten und/oder Steigungen/Gefällen (Erkennung beispielsweise über ein Navigationssystem beziehungsweise allgemein prädiktive Streckendaten), bei einer Fahrt bei widrigen Wetterbedingungen wie Regen, Schneefall und/oder Glatteis (Erkennung über Aktivität der Scheibenwischer, einen Regensensor, Wetterdaten des Internets und/oder Car to Car-Informationen), bei einer Fahrt bei Dunkelheit (Erkennung beispielsweise über einen Lichtsensor), aber auch für bestimmte, definierte Streckenabschnitte, was wiederum beispielsweise über ein Navigationssystem im Zusammenhang mit einem GNSS-Sensor, insbesondere einem GPS-Sensor, nachverfolgt werden kann. Ähnlich kann die Vorliebe des Fahrers, die pilotierte Fahrfunktion zu nutzen, auch von der Anzahl der Personen im Kraftfahrzeug abhängig sein, wenn der Fahrer die pilotierte Fahrfunktion bislang immer nur genutzt hat, wenn er alleine im Kraftfahrzeug unterwegs war. Die Anwesenheit weiterer Personen im Kraftfahrzeug kann beispielsweise über Sitzbelegungssensoren, Gurtschlusssensoren und dergleichen festgestellt werden.

Auch das Verhalten der Vergangenheit des Fahrers bezüglich der Nutzung der pilotierten Fahrfunktion in Bezug auf Fahrspuren kann analysiert werden. Fährt der Fahrer beispielsweise gerade auf der Überholspur einer mehrspurigen Autobahn und hatte die pilotierte Fahrfunktion bislang immer nur auf der ganz rechten Fahrspur beziehungsweise bei einer einzelnen Fahrspur genutzt, kann entsprechend eine Aktivierungsempfehlung bzw. Deaktivierungsempfehlung abgeleitet beziehungsweise unterdrückt werden. Die Ermittlung von Informationen über Fahrspuren kann dabei auf Daten einer auf das Vorfeld des Kraftfahrzeugs gerichteten Kamera und/oder von entsprechenden Radarsensoren und/oder aufgrund von digitalem Kartenmaterial eines Navigationssystems (Anzahl der Fahrspuren) ermittelt werden.

Die Historiendaten können schließlich auch ein zeitliches Vorliebenprofil beschreiben, indem beispielsweise statistisch analysiert wurde, in welchen Zeiträumen der Fahrer die pilotierte Fahrfunktion des Autopilotsystems bevorzugt nutzt. Beispielsweise kann analysiert werden, an welchen Wochentagen und/oder zu welchen Uhrzeiten die pilotierte Fahrfunktion eher genutzt oder eher nicht genutzt wird, um dies bei der Ermittlung der Empfehlungsinformation zu berücksichtigen. Dabei können insbesondere auch Informationen eines entsprechenden Zeitgebers, insbesondere einer Uhr, berücksichtigt werden.

Eine weitere konkrete Ausgestaltung der vorliegenden Erfindung sieht vor, dass die Empfehlungsinformation durch Auswertung von aktuell durchgeführten oder durchzuführenden Tätigkeiten des Fahrers beschreibenden Tätigkeitsdaten ermittelt wird. Hat der Fahrer also bereits mit typischen Nebentätigkeiten begonnen, die die Nutzung der pilotierten Fahrfunktion besonders sinnvoll machen würden, oder stehen derartige Nebentätigkeiten an, weil beispielsweise besonders viele E-Mails eingegangen sind und/oder der Kalender des Fahrers eine Telefonkonferenz anzeigt, kann hieraus eine Aktivierungsempfehlung folgen; genauso kann ein Beendigen solcher Nebentätigkeiten zu einer Deaktivierungsempfehlung führen. Konkret kann also beispielsweise vorgesehen sein, dass bei eine nicht während der Fahrzeugführung durchzuführende Tätigkeit beschreibenden Tätigkeitsdaten eine Aktivierungsempfehlung erzeugt wird. Derartige Tätigkeiten umfassen beispielsweise das Schreiben/Lesen von Kurznachrichten, die Bearbeitung von Kalendereinträgen, die Durchführung von Internetrecherchen, das Ansehen eines Films und dergleichen. Eine Ermittlung der Tätigkeitsdaten kann dabei beispielsweise über das Erfassen von Benutzereingaben an einem Benutzerinterface des Kraftfahrzeugs, ein Innenraummikrofon, insbesondere das genannte akustische Aufnahmemittel, und/oder Bedienungsdaten eines mit dem Kraftfahrzeug gekoppelten Mobilgeräts, beispielsweise eines Smartphones, erfolgen.

Als weiteres konkretes Ausführungsbeispiel kann vorgesehen sein, dass die Empfehlungsinformation durch Auswertung von eine aktuelle Ablenkung und/oder Aufmerksamkeit des Fahrers beschreibenden Aufmerksamkeitsdaten ermittelt wird. Dabei kann konkret vorgesehen sein, dass als die Müdigkeit betreffende Aufmerksamkeitsdaten die Augen des Fahrers zeigende Bilddaten und/oder Daten über die Dauer der aktuellen Fahrt und/oder eine Uhrzeit und/oder Informationen über die Eintönigkeit eines Streckenabschnitts und/oder als die Ablenkung betreffende Aufmerksamkeitsdaten insbesondere mittels eines oder des akustischen Aufnahmemittels ermittelte Informationen über ein geführtes Gespräch des Fahrers verwendet werden. Weist also beispielsweise der Fahrer Symptome für beginnende Müdigkeit beziehungsweise Unkonzentriertheit auf, kann die Nutzung der pilotierten Fahrfunktion besonders sinnvoll erscheinen. Der Müdigkeitszustand eines Fahrers kann beispielsweise über eine Innenraumkamera beziehungsweise deren Bilddaten erfolgen, insbesondere als Lidschlusserkennung. Auch eine lange Fahrtdauer, eine späte Uhrzeit und/oder eine monotone Strecke können Anzeichen für eine Müdigkeit und/oder Unkonzentriertheit des Fahrers darstellen. Mit besonderem Vorteil wird dabei eine Kopplung an ein Fahrerassistenzsystem zur Pausenempfehlung, wie es im Stand der Technik bereits vorgeschlagen wurde, vorgenommen. Derartige Fahrerassistenzsysteme analysieren ebenso Fahrerdaten und leiten daraus eine auszugebende Pausenempfehlung ab, wenn die Müdigkeit beziehungsweise Aufmerksamkeit des Fahrers dies als sinnvoll erscheinen lässt. Das Fahrerassistenzsystem zur Pausenempfehlung kann für die Ermittlung der Empfehlungsinformation daher nützliche, bereits ausgewertete Daten bereitstellen.

Zur Ablenkung des Fahrers können auch insbesondere angeregte Diskussionen/Gespräche mit weiteren Insassen des Kraftfahrzeugs und/oder am Telefon führen. Auch hier kann die Nutzung der pilotierten Fahrfunktion besonders sinnvoll sein. Der Beginn solcher Gespräche und/oder Telefonate kann beispielsweise über das bereits erwähnte Aufnahmemittel, insbesondere ein Innenraummikrofon, Sitzbelegungssensoren und/oder Gurtschlosssensoren bezüglich der Insassen erfolgen, ein Telefonat kann auch über ein mit dem Kraftfahrzeug gekoppeltes Mobilgerät, insbesondere Smartphone, festgestellt werden.

Wie bereits erwähnt, werden die genannten Ausgestaltungen zur Ermittlung von Empfehlungsinformationen bevorzugt kombiniert eingesetzt. In einer zweckmäßigen Ausgestaltung in Kombination mit Empfehlungsstufen können beispielsweise aufgrund der Tätigkeitsdaten und/oder Fahrerdaten ermittelten Aktivierungsempfehlungen höhere Empfehlungsgrade zugeordnet werden als aufgrund der Historiendaten ermittelten Aktivierungsempfehlungen. Selbstverständlich sind jedoch auch Zuordnungen zu Empfehlungsgraden denkbar, die eher auf einer allgemeinen Analyse des Betriebszustands beruhen, beispielsweise, ob der Empfehlungsauslöser kurzzeitig oder eher dauerhaft ist und/oder welche Sicherheitskriterien erfüllt sind.

Hinsichtlich der Tätigkeitsdaten sei noch angemerkt, dass eine Weiterbildung vorsehen kann, dass der Tätigkeit und somit einer auf diese bezogenen Aktivierungsempfehlung auch eine Zeitspanne zugeordnet werden kann, die mit der Zeitinformation, insbesondere für die Aktivierbarkeitsinformation, verknüpft werden kann, um die Aktivierungsempfehlung zu ermittelt und/oder einer Empfehlungsstufe zuzuordnen. Plant der Fahrer beispielsweise, einen Film zu sehen bzw. dies fortzusetzen, sollte ein längerer Zeitraum der auch technischen Verfügbarkeit bereitstehen, damit dies lohnenswert ist, beispielsweise wenigstens 10 bis 20 Minuten als Zeitspanne. Eine SMS schreibt sich hingehen schneller, so dass hier beispielsweise eine technische Aktivierbarkeit für ein bis drei Minuten als Zeitspanne ausreichend sein kann. Eine Aktivierungsempfehlung kann gerade in diesem Kontext vorteilhaft Hintergrundinformationen umfassen, so dass beispielsweise eine akustische Ausgabe der Art "Sie könnten für etwa 15 Minuten den Autopiloten aktivieren, um Ihren Film fortzusetzen" erfolgen kann. Stünde die pilotierte Fahrfunktion jedoch nur kurz zur Verfügung, kann eine Aktivierungsempfehlung bezüglich des Films nicht oder nur mit sehr geringem Empfehlungsgrad ermittelt werden.

In einer besonders vorteilhaften Weiterbildung der vorliegenden Erfindung kann vorgesehen sein, dass das erste Ausgabeelement und das zweite Ausgabeelement jeweils unterschiedlichen Anzeigebaugruppen und/oder Anzeigeorten der Anzeigeeinrichtung zugeordnet sind. Mit besonderem Vorteil wird dabei ein erstes Ausgabeelement, das einer Kombinationsanzeige des Kraftfahrzeugs, beispielsweise hinter dem Lenkrad zugeordnet ist, und ein zweites Ausgabeelement, das an einer Mittelkonauf sole oder einer Navigationsanzeige, insbesondere auf einem dortigen Display, angeordnet ist, verwendet. Auf diese Art und Weise sind die Ausgabeelemente nicht nur inhaltlich (technische Verfügbarkeit - fahrerbezogene Empfehlung), sondern auch räumlich getrennt, so dass sich der unterschiedliche Inhalt auch bei ähnlicher Ausgestaltung für den Fahrer dennoch erschließt.

Konkret kann beispielsweise als erstes Ausgabeelement ein hinterleuchtbares und/oder einfärbbares und/oder ergänzbares Symbol, insbesondere Icon, verwendet werden. Mithin kann beispielsweise ein Symbol herangezogen werden, welches durch eine weiße Farbe den Aktivierbarkeitszustand "Autopilotsystem = verfügbar" anzeigt, bei aktivierter pilotierter Fahrfunktion dann jedoch grün eingefärbt wird. Zeigt die technische Aktivierbarkeitsinformation an, dass die pilotierte Fahrfunktion gerade nicht verfügbar ist, kann beispielsweise gar kein Symbol angezeigt werden. Dies kann entsprechend ergänzt werden, wenn beispielsweise eine Vorankündigung erfolgen soll, so dass das Symbol beispielsweise in Gelb angezeigt werden kann und ein sich reduzierender Balken die Zeitinformation als Abstand bis zur Aktivierbarkeit wiedergibt. Über das erste Ausgabeelement und seine Anzeige hat der Fahrer mithin die Möglichkeit, zu erkennen, ob die pilotierte Fahrfunktion grundsätzlich aktivierbar wäre, das bedeutet, alle technischen Aktivierungsbedingungen erfüllt sind.

In der zuvor genannten konkreten Ausgestaltung kann das zweite Ausgabeelement bevorzugt als Teil eines Displays realisiert sein, welches auch dem Navigationssystem zugeordnet werden kann oder aber ein Multifunktionsdisplay sein kann. Die Nutzung eines auch durch ein Navigationssystem nutzbaren Displays erlaubt es beispielsweise, Streckenabschnitte, auf denen die Nutzung der pilotierten Fahrfunktion empfohlen ist, hervorzuheben. Zusätzlich kann beispielsweise eine entsprechende Anzeige der Empfehlungsinformation durch einen Schriftzug "pilotierte Fahrfunktion: empfohlen" dargestellt werden. Insbesondere bietet sich ein derartiges Display auch für die Ausgabe von Zeitinformationen an. Dabei sei darauf hingewiesen, dass es grundsätzlich auch denkbar ist, zumindest die optischen Ausgaben vergleichbar zu gestalten, beispielsweise auf dem Display den Text "Staupilot: verfügbar" auszugeben, wenn Letzteres beispielsweise nur als Aktivierungsempfehlung in einem begrenzten Zeitraum, wie eingangs dargelegt, erfolgt.

Auch bei einer Kombination mit einer akustischen Ausgabe, wie beschrieben, ist eine entsprechende Ausgestaltung denkbar.

Neben dem Verfahren betrifft die Erfindung auch ein Kraftfahrzeug, aufweisend ein zur vollständig automatischen Führung des Kraftfahrzeugs ausgebildetes Autopilotsystem, eine Anzeigeeinrichtung mit einem eine Aktivierbarkeit des Autopilotsystems anzeigenden, ersten Ausgabeelement und einem zweiten Ausgabeelement und eine zur Durchführung des erfindungsgemäßen Verfahrens ausgebildete Steuereinrichtung. Sämtliche Ausführungen bezüglich des erfindungsgemäßen Verfahrens lassen sich analog auf das erfindungsgemäße Kraftfahrzeug übertragen, mit welchem mithin ebenso die bereits genannten Vorteile erhalten werden können.

Insbesondere erlaubt es die vorliegende Erfindung zusammenfassend, eine höhere Akzeptanz und Verständlichkeit der pilotierten Fahrfunktion herbeizuführen, den Nutzen für den Fahrer zu erhöhen und eine Verärgerung des Fahrers zu vermeiden.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs,
- Fig. 2: einen Ablaufplan eines Ausführungsbeispiels des erfindungsgemäßen Verfahrens,
- Fig. 3: ein Anzeigekonzept für das erfindungsgemäße Verfahren,
- Fig. 4: eine Möglichkeit zur Einbindung der Anzeige einer Zeitinformation,
- Fig. 5: ein weiteres Anzeigekonzept für das erfindungsgemäße Verfahren, und
- Fig. 6: einen zeitlichen Ablauf für Anzeigeereignisse..

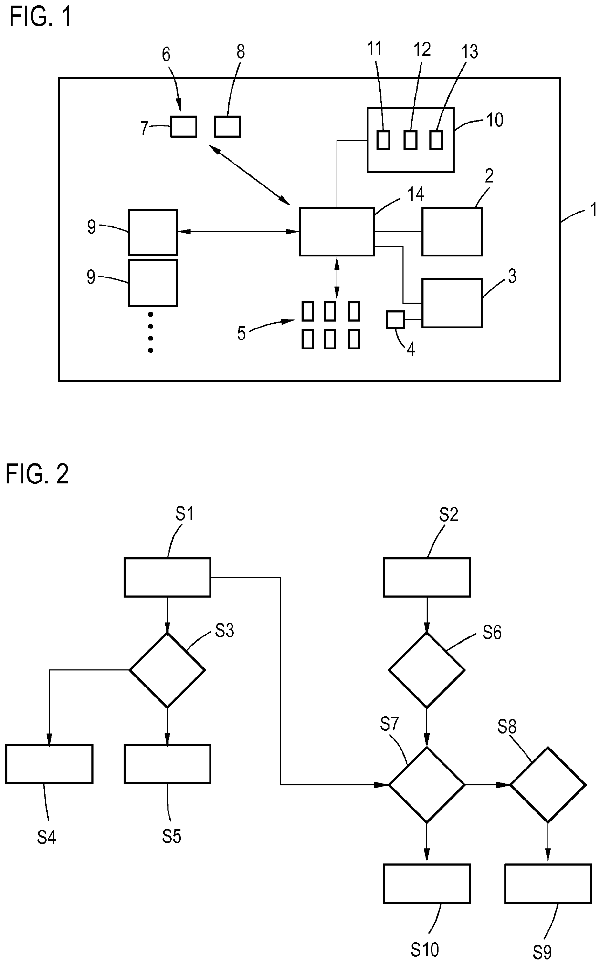

Fig. 1 zeigt eine Prinzipskizze eines erfindungsgemäßen Kraftfahrzeugs 1. Das Kraftfahrzeug 1 weist ein zur vollständig automatischen Führung des Kraftfahrzeugs 1 innerhalb bestimmter, durch eine Systemgrenzeninformation beschriebener Systemgrenzen ausgebildetes Autopilotsystem 2 auf, welches über entsprechende, hier nicht näher gezeigte Bedienmittel bei Verfügbarkeit durch einen Fahrer aktivierbar oder deaktivierbar ist. Das Kraftfahrzeug weist ferner ein Navigationssystem 3 mit einem entsprechenden geodätischem Positionssensor 4, eine Mehrzahl von Umgebungssensoren 5, Innensensoren 6, vorliegend umfassend eine Innenraumkamera 7 und ein als Innenraummikrofon ausgebildetes Aufnahmemittel 8, sowie weitere Fahrzeugsysteme 9, umfassend auch Eigensensoren, die Betriebszustandsdaten des Kraftfahrzeugs in der aktuellen Betriebssituation bereitstellen können, auf. Fahrsituationsdaten, die ebenso die aktuelle Betriebssituation beschreiben, werden insbesondere durch das Navigationssystem 3 und sein digitales Kartenmaterial sowie die Umgebungssensoren 5 beziehungsweise die Auswertung von deren Sensordaten bereitgestellt. Zur Ausgabe von Informationen an einen Fahrer weist das Kraftfahrzeug 1 ferner eine Anzeigeeinrichtung 10 auf, die vorliegend mehrere Ausgabeelemente 11, 12 und 13 umfasst, die im weiteren Verlauf noch genauer erläutert werden. Schließlich ist eine Steuereinrichtung 14 vorgesehen, die auch ein Steuergerät des Autopilotsystems 2 umfassen kann und zur Durchführung des erfindungsgemäßen Verfahrens ausgebildet ist.

Dieses sei anhand eines Ausführungsbeispiels in Fig. 2 näher erläutert. Dabei werden zwei Arten von Informationen hinsichtlich der Aktivierung/Deaktivierung des Autopilotsystems 1 parallel zyklisch ermittelt und aktualisiert.

In einem Schritt S1 erfolgt, wie dies im Stand der Technik grundsätzlich bekannt ist, eine Ermittlung einer die grundsätzliche technische Aktivierbarkeit aufgrund der Systemgrenzeninformation beschreibenden technischen Aktivierbarkeitsinformation, wobei letztlich, wie grundsätzlich bekannt, die aktuelle Betriebssituation und vorausliegende Betriebssituationen, insoweit prädiktive Streckendaten in hinreichender Menge hierfür bekannt sind, beispielsweise aufgrund der Umgebungssensoren 5 und des Navigationssystems 3, dahingehend überprüft werden, ob der durch die Systemgrenzen der Systemgrenzeninformation beschriebene Einsatzbereich der pilotierten Fahrfunktion des Autopilotsystems 2 gegeben ist. Für Streckenabschnitte, für die die technische Aktivierbarkeit festgestellt wurde, zeigt die technische Aktivierbarkeitsinformation eben dies an. Die Betriebssituation wird dabei durch Betriebsdaten des Kraftfahrzeugs 1 und Fahrsituationsdaten beschrieben, die eine Vielzahl von Informationen enthalten können, insbesondere was die aktuell befahrene und vorausliegende Strecke (prädiktive Streckendaten), die Wetterverhältnisse und die Verkehrsverhältnisse angeht. Dabei sei darauf hingewiesen, dass das Kraftfahrzeug 1 insbesondere auch eine (hier nicht näher gezeigte) Kommunikationseinrichtung aufweisen kann, um im Internet und/oder mit anderen Kraftfahrzeugen zu kommunizieren, um entsprechende Fahrsituationsdaten zu erhalten.

In einem Schritt S2 wird parallel zum Schritt S1 eine weitere Information ermittelt, nämlich zusätzlich zur technischen Aktivierbarkeitsinformation eine fahrerbezogene Empfehlungsinformation, die eine Aktivierungsempfehlung und/oder eine Deaktivierungsempfehlung aufgrund der Vorlieben des Fahrers bezüglich des Autopilotsystems 2 und des auf die Fahrzeugführung bezogenen Fahrerzustands beschreibt. Das bedeutet, im Schritt S2 wird antizipiert, ob ein Aktivieren der pilotierten Fahrfunktion, bei der es sich im Übrigen beispielsweise um einen Staupiloten, einen Autobahnpiloten oder dergleichen handeln kann, für den Fahrer aufgrund seiner Vorlieben und/oder seines aktuellen Zustands sinnvoll erscheint.

Sowohl die Aktivierbarkeitsinformation als auch die Empfehlungsinformation werden zusätzlich mit einer Zeitinformation ermittelt, die letztlich die Erstreckung der Streckenabschnitte beschreibt, für die die technische Aktivierbarkeit gegeben ist beziehungsweise eine Aktivierung empfohlen wird. Insbesondere kann die Zeitinformation eine Zeit und/oder Strecke bis zur Aktivierbarkeit/Aktivierungs- oder Deaktivierungsempfehlung und/oder eine räumliche und/oder zeitliche Dauer der Aktivierbarkeit/Aktivierungsempfehlung angeben.

Als Teil der Empfehlungsinformation wird vorliegend in jedem Fall auch eine Hintergrundinformation ermittelt, die einen Grund für die Aktivierungsempfehlung beziehungsweise Deaktivierungsempfehlung beschreibt, wie im Folgenden noch beispielhaft dargelegt werden wird. Zudem werden Empfehlungen, insbesondere wenigstens Aktivierungsempfehlungen, auch einen Empfehlungsgrad anzeigende Empfehlungsstufen zugeordnet, denen unterschiedliche Ausgabearten zugeordnet sein können. Es können auch zu einem Zeitpunkt mehrere Empfehlungen vorliegen.

In die Ermittlung der Empfehlungsinformation gehen verschiedene Arten von Daten als Fahrerdaten ein. Zunächst sind dies das Fahrerverhalten in der Vergangenheit beschreibende Historiendaten, wobei im Schritt S2 eine zu analysierende Betriebssituation wenigstens einer Betriebssituationsklasse zugeordnet wird, für die ein Vorzugsverhalten des Fahrers anzeigende Historiendaten vorliegen, welche zur Ermittlung der Empfehlungsinformation verwendet werden. Insbesondere beschreiben die Historiendaten dabei Fälle, in denen der Fahrer die pilotierte Fahrfunktion bewusst aktiviert oder deaktiviert hat. Beispielsweise kann trotz technischer Aktivierbarkeit die pilotierte Fahrfunktion vom Fahrer bei Tunneldurchfahrten, Steigungen und/oder Gefällen, widrigen Wetterbedingungen, bei Dunkelheit oder aber für bestimmte definierte Streckenabschnitte unerwünscht sein, was entsprechend über Betriebssituationsklassen abgebildet werden kann. Entsprechende Fahrsituationsdaten und Betriebsdaten ergeben sich dabei, wie bereits beschrieben wurde, insbesondere aus den Fahrzeugsystemen 9, den Umgebungssensoren 5 und dem Navigationssystem 3. Aus prädiktiven Streckendaten, insbesondere des Navigationssystems 3, lassen sich beispielsweise Tunneldurchfahrten und Steigungen/Gefälle erkennen; widrige Wetterbedingungen können sich aufgrund des Betriebs eines Scheibenwischers und/oder aus Sensordaten eines Regensensors und/oder aus Wetterdaten des Internets und/oder Car to Car-Informationen ergeben. Sensordaten eines Lichtsensors können die Helligkeit außerhalb des Kraftfahrzeugs beschreiben, während definierte Streckenabschnitte sich aus dem Navigationssystem 3 unter Berücksichtigung des Positionssensors 4 ergeben.

Andere Betriebssituationsklassen können beispielsweise die Anzahl von Personen im Kraftfahrzeug betreffen. Existieren beispielsweise Fahrer, die pilotierte Fahrfunktionen bevorzugt einsetzen, wenn sich mehrere Personen im Kraftfahrzeug befinden, kann dies entsprechend festgestellt werden, wobei sich die Anwesenheit von Passagieren im Kraftfahrzeug beispielsweise über Sitzbelegungssensoren, Gurtschlusssensoren und dergleichen erkennen lassen. Auch Vorlieben bezüglich bestimmter Fahrspuren lassen sich abbilden, wobei die aktuell befahrene Fahrspur beispielsweise durch eine auf das Vorfeld des Kraftfahrzeugs 1 gerichtete Kamera beziehungsweise Radarsensoren als Umgebungssensoren 5 erkannt werden kann, während sich die Anzahl der vorhandenen Fahrspuren beispielsweise aus Daten des Navigationssystems 3 und/oder wiederum der auf das Vorfeld gerichteten Kamera ermitteln lässt.

Weitere Fahrerdaten, die im Schritt S2 genutzt werden, um die Empfehlungsinformation zu ermitteln, umfassen aktuell durchgeführte oder durchzuführende Tätigkeiten des Fahrers beschreibende Tätigkeitsdaten. Wird beispielsweise festgestellt, dass der Fahrer bereits mit typischen Nebentätigkeiten begonnen hat, die die Nutzung der pilotierten Fahrfunktion besonders sinnvoll machen, kann eine entsprechende Aktivierungsempfehlung erzeugt werden. Nebentätigkeiten, die nicht während der Fahrzeugführung durch den Fahrer durchgeführt werden sollten, umfassen beispielsweise das Schreiben und/oder Lesen von Kurznachrichten, das Bearbeiten von Kalendereinträgen, Internetrecherchen und/oder das Ansehen eines Films. Entsprechende Betriebsdaten des Kraftfahrzeugs können beispielsweise aus Bedienhandlungen des Fahrers, Informationen eines gekoppelten Mobilgeräts, insbesondere Smartphones, und/oder des akustischen Aufnahmemittels 8 gefolgert werden. Einer Tätigkeit kann dabei eine Zeitspanne zugeordnet werden, welche zur Ermittlung einer Aktivierungsempfehlung an sich und/oder eines Empfehlungsgrades in Kontext zu einer die Länge der technischen Aktivierbarkeit beschreibenden Zeitinformation der Aktivitätsinformation gesetzt werden kann. Beispielsweise kann ermittelt werden, ob die Tätigkeit innerhalb der Verfügbarkeitsspanne sinnvoll durchgeführt werden kann.

Die Empfehlungsinformation wird ferner durch Auswertung von Aufmerksamkeitsdaten bezüglich des Fahrers ermittelt, welche eine aktuelle Ablenkung und/oder Aufmerksamkeit des Fahrers beschreiben. Hierbei kann insbesondere, beispielsweise aufgrund der Daten der Innenraumkamera 7, beobachtet werden, ob der Fahrer Symptome für beginnende Müdigkeit beziehungsweise Unkonzentriertheit aufweist, die die Nutzung der pilotierten Fahrfunktion als sinnvoll erscheinen lassen. Der Müdigkeitszustand kann beispielsweise über eine Bildanalyse der Augen des Fahrers (Lidschluss) bestimmt werden, wobei weitere Indizien eine lange Fahrtdauer, eine späte Uhrzeit und eine monotone Strecke (Daten des Navigationssystems 3) darstellen; besonders bevorzugt werden Eingangsdaten eines Fahrerassistenzsystems zur Pausenempfehlung als weiteres Fahrzeugsystem 9 herangezogen. Eine Ablenkung kann ferner auch durch ein Gespräch mit einem Telefonpartner und/oder einem Insassen gegeben sein, wobei hier zur Erkennung wiederum das akustische Aufnahmemittel 8 (Innenraummikrofon), Sitzbelegungssensoren, Gurtschlusssensoren und/oder ein gekoppeltes Mobilgerät (Smartphone) herangezogen werden können.

Gerade bei der Auswertung der Fahrerdaten und der Tätigkeitsdaten können sich hierbei auch Aktivierungsempfehlungen höheren Empfehlungsgrades ergeben, die auf einen aktuellen, kurzzeitigen und/oder eher sicherheitskritischen Betriebszustand bezogen sind und zu einer niedrigerstufigen Aktivierungsempfehlung, beispielsweise für einen Streckenabschnitt, hinzukommen kann. Solche Empfehlungen können auch als längerfristig und aktualitätsbezogen bezeichnet werden.

Die technische Aktivierbarkeitsinformation, die im Schritt S1 ermittelt wurde, wird mittels eines ersten Ausgabeelements 11 der Anzeigeeinrichtung 10 des Kraftfahrzeugs 1 ausgegeben. Dabei wird in einem Schritt S3 überprüft, ob beziehungsweise wann eine technische Aktivierbarkeit des Autopilotsystems 2 gegeben sein wird, so dass beispielsweise eine Aktivierbarkeit im Schritt S4 und eine Nichtaktivierbarkeit im Schritt S5 angezeigt werden kann. Eine Aktivierbarkeitsinformationsausgabe im Schritt S4 kann sich auch auf eine bald mögliche technische Aktivierbarkeit beziehen, beispielsweise indem die Zeitinformation genutzt und mit auf den ersten Ausgabeelement 11 ausgegeben wird.

Auch bezüglich der Empfehlungsinformation wird in einem Schritt S6 zunächst überprüft, ob eine Aktivierungsempfehlung und/oder eine Deaktivierungsempfehlung für den aktuellen und/oder einen vorausliegenden Streckenabschnitt vorliegt. Ist dies der Fall, wird jedoch in einem Schritt S7 zunächst überprüft, ob für den entsprechenden Streckenabschnitt auch die technische Aktivierbarkeit gegeben ist. Ist dies nämlich im Schritt S7 nicht der Fall, erfolgt im Schritt S8 eine Überprüfung, ob die aktuelle Betriebssituation wenigstens einen empfehlbaren Fahreingriff des Fahrers zulässt, der zur Herstellung der technischen Aktivierbarkeit führt. Ein derartiger Fahreingriff kann für eine recht baldige Herstellung der technischen Aktivierbarkeit beispielsweise einen Spurwechsel oder eine Geschwindigkeitsreduzierung umfassen, falls die pilotierte Fahrfunktion nur in bestimmten Geschwindigkeitsbereichen beziehungsweise auf bestimmten Spuren eingesetzt werden darf. Es kann jedoch auch vorausschauend überprüft werden, beispielsweise der Wechsel der Straßenklasse, beispielsweise von einer Landstraße auf eine Autobahn, empfohlen werden, um den Autopiloten einzusetzen, beispielsweise im Falle eines Autobahnpiloten. Dann kann eine entsprechende Alternativroute mittels des Navigationssystems 3 des Kraftfahrzeugs 1 ermittelt und ausgegeben werden. In jedem Fall wird dann, wenn wenigstens ein Fahreingriff des Fahrers die technische Aktivierbarkeit herstellt und zudem eine Aktivierungsempfehlung vorliegt, eine entsprechende den Fahreingriff beschreibende Fahrerinformation erzeugt und unter Nutzung des hier auch als zweites Ausgabeelement genutzten, als akustisches Ausgabemittel ausgebildeten Ausgabeelements 13 ausgegeben. Dabei kann insbesondere eine Sprachausgabe der Art "Um den Autobahnpilot zu aktivieren, bitte zuerst auf die rechte Fahrspur wechseln/die Geschwindigkeit reduzieren/eine alternative Route über die Autobahn wählen" erfolgen. Diese Ausgabe der Fahrerinformation erfolgt in einem Schritt S9.

Aktivierungsempfehlungen und Deaktivierungsempfehlungen können in einem Schritt S10 über die zweiten Ausgabeelemente 12, 13 ausgegeben werden, wobei es sich bei dem Ausgabeelement 12 um ein optisches Ausgabeelement, bei dem Ausgabeelement 13 um ein akustisches Ausgabemittel handelt. Die Ausgabe einer Aktivierungsempfehlung beziehungsweise einer Deaktivierungsempfehlung erfolgt dabei zweckmäßig zu Beginn eines Streckenabschnitts, auf den sie bezogen ist, je nach Empfehlungsstufe beispielsweise begrenzt auf einen vorbestimmten Zeitraum, hier fünf Sekunden, oder dauerhaft. Die ermittelte Hintergrundinformation wird dabei, bevorzugt mittels Sprachausgabe über das als akustisches Ausgabemittel ausgebildete zweite Anzeigeelement 13, mit ausgegeben. Beispielsweise kann eine auf einen längeren Streckenabschnitt bezogene Aktivierungsempfehlung dauerhaft optisch angezeigt werden und durch eine auf eine Aktivierungsempfehlung höheren Aktivierungsgrads, die insbesondere akustisch ausgegeben wird, ergänzt werden. Es resultieren beispielsweise Ausgaben wie "Möchten Sie den Autobahnpilot jetzt einschalten? Sie könnten damit Ihre E-Mails bequem und sicher bearbeiten." oder "Möchten Sie den Autobahnpilot jetzt deaktivieren? In Kürze fahren wir in einen Tunnel ein." (Im letzten Fall wurde durch die Historiendaten festgestellt, dass der Fahrer in Tunneln ungern den Autobahnpilot nutzt.)

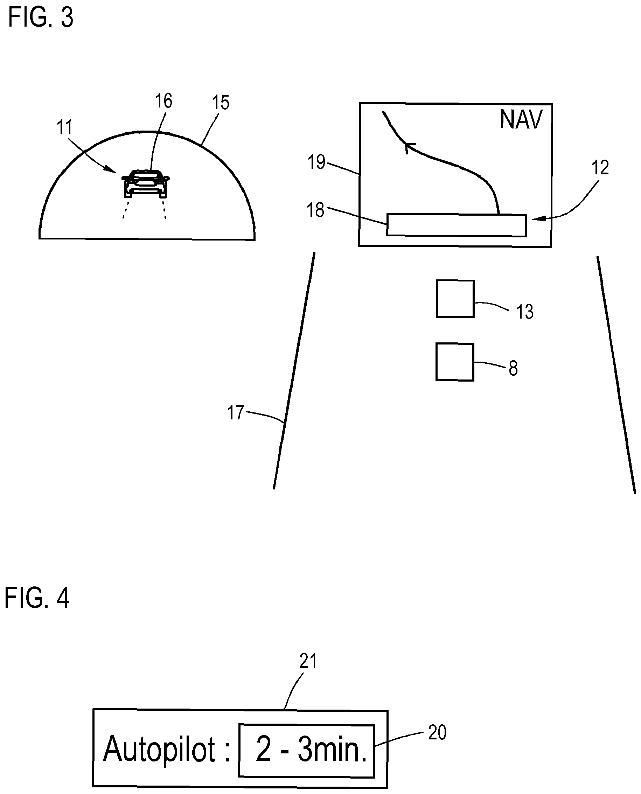

Ein erstes Anzeigekonzept für die optische Ausgabe der technischen Aktivierbarkeitsinformation und der Empfehlungsinformation ist beispielhaft in Figur 3 dargestellt. Dabei wird als erstes Ausgabeelement 11 ein in ein hinter dem Lenkrad angeordnetes Kombiinstrument 15 integriertes Symbol 16, das hinterleuchtbar ist, genutzt. Wird das Symbol 16 grün hinterleuchtet, ist die pilotierte Fahrfunktion aktiviert, wird es weiß hinterleuchtet, ist sie aktivierbar und ist es nicht sichtbar, liegt keine technische Aktivierbarkeit vor. Ein gelbes Hinterleuchten im Zusammenhang mit einer abnehmenden Balkenanzeige (aufgrund der Zeitinformation) kann bei einer vorausliegenden Aktivierbarkeit eingesetzt werden.

Räumlich getrennt im Bereich einer Mittelkonsole 17 ist das zweite Ausgabeelement 12 als Textfeld 18 eines Displays 19 vorgesehen, auf dem auch Daten des Navigationssystems 3 angeordnet sein können. Ergänzt wird die dortige Ausgabe von Aktivierungsempfehlungen/Deaktivierungsempfehlungen durch das letztlich beliebig anordenbare akustische Ausgabemittel als zweites Ausgabeelement 13. Es sei an dieser Stelle noch angemerkt, dass der Fahrer vorliegend auf eine akustische Ausgabe auch sprachlich reagieren kann, wozu das Aufnahmemittel 8 (Innenraummikrofon) eingesetzt wird, um eine sprachliche Antwort des Fahrers aufzunehmen, die dann zu einer entsprechenden Steuerinformation für das Autopilotsystem 2 ausgewertet werden kann. Das akustische Ausgabemittel (Ausgabeelement 13) und das akustische Aufnahmemittel 8 (Innenraummikrofon) können auch Teile einer Freisprecheinrichtung bilden.

Fig. 4 zeigt schließlich eine Integration einer Zeitinformation 20 in eine Darstellung 21. Beispielsweise kann der Rahmen der Anzeige "2 bis 3 Minuten" bei aktiviertem Autopilot und Restaktivierungsdauer grün sein, bei vorausliegender Aktivierbarkeit/Aktivierungsempfehlung gelb. Dies kann selbstverständlich auch durch weitere Ausgabebestandsteile weiter erläutert werden.

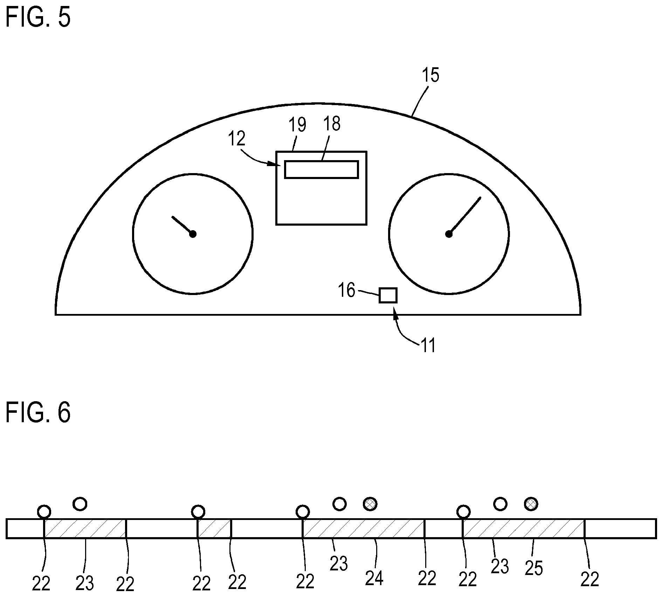

In dem in Fig. 5 gezeigten weiteren Anzeigekonzept sind zumindest das erste Ausgabeelement 11 und das optische zweite Ausgabeelement 12 innerhalb des Kombiinstruments 15, jedoch räumlich getrennt, integriert, nachdem auch ein Display 19 des Navigationssystems bzw. ein Multifunktionsdisplay dort realisiert ist.

Fig. 6 zeigt schließlich noch schematisch einen möglichen zeitlichen Ablauf zur Ausgabe der technischen Aktivierbarkeit und von Aktivierungsempfehlungen/Deaktivierungsempfehlungen. In den schraffierten Zeitbereichen ist die technische Verfügbarkeit gemäß der Aktivierbarkeitsinformation gegeben, so dass wenigstens zu den Zeitpunkten 22 das erste Ausgabeelement 11 diesen Wechsel anzeigend angesteuert wird, ggf. auch wie in Fig. 3 gezeigt vorbereitend. Die Zeitpunkte 23 zeigen Aktivierungsempfehlungen niedriger Aktivierungsstufen an, die sich beispielsweise aus den Historiendaten hergeleitet auf einen längeren Streckenabschnitt beziehen. Die entsprechende, bevorzugt nur optische Ausgabe kann dauerhaft für die Dauer der Aktivierungsempfehlung bestehen. Zum Zeitpunkt 24 kommt beispielhaft eine Aktivierungsempfehlung höheren Empfehlungsgrades, mithin einer zweiten Empfehlungsstufe hinzu, etwa, weil der Fahrer mit einer Tätigkeit begonnen hat oder diese beginnen will, die sicherer mit aktivierter automatisierter Fahrfunktion durchgeführt wird.

Mithin erfolgt am Zeitpunkt 24 - zusätzlich zur dauerhaften Anzeige der anderen Aktivierungsempfehlung - eine zumindest akustische Ausgabe dieser weiteren Aktivierungsempfehlung, beispielsweise: "Wenn Sie nun den Autopiloten aktivieren, können Sie der Tätigkeit nachgehen.".

Der Zeitpunkt 25 markiert beispielhaft eine Deaktivierungsempfehlung, da dort beispielsweise in einen Tunnel eingefahren wird.

## Patentansprüche

1. Verfahren zum Betrieb eines Kraftfahrzeugs (1), welches ein zur vollständig automatischen Führung des Kraftfahrzeugs (1) ausgebildetes Autopilotsystem (2) aufweist, zu dem in Abhängigkeit einer aktuellen und/oder vorausliegenden, durch Fahrsituationsdaten und/oder Betriebszustandsdaten des Kraftfahrzeugs (1) beschriebenen Betriebssituation und einer den Einsatzbereich des Autopilotsystems (2) beschreibenden Systemgrenzeninformation eine technische Aktivierbarkeitsinformation ermittelt wird, wobei das Kraftfahrzeug (1) ferner eine Anzeigeeinrichtung (10) mit einem die Aktivierbarkeit des Autopilotsystems (2) gemäß der technischen Aktivierbarkeitsinformation anzeigenden, ersten Ausgabeelement (11) aufweist,
**dadurch gekennzeichnet,**
**dass** zusätzlich zu der technischen Aktivierbarkeitsinformation in Abhängigkeit von der Betriebssituation und von Vorlieben bezüglich des Autopilotsystems (2) und/oder den Zustand des Fahrers bezüglich der Fahrzeugführung beschreibenden Fahrerdaten eine fahrerbezogene Empfehlungsinformation ermittelt wird, in deren Abhängigkeit ein zweites, eine Aktivierungsempfehlung gemäß der Empfehlungsinformation anzeigendes Ausgabeelement (12, 13) der Anzeigeeinrichtung (10) angesteuert wird, wobei die Aktivierbarkeitsinformation und die Empfehlungsinformation parallel zyklisch ermittelt und aktualisiert werden.

2. Verfahren nach Anspruch 1,
**dadurch gekennzeichnet,**
**dass** eine Aktivierungsempfehlung nur für Streckenabschnitte angezeigt wird, für die gemäß der Aktivierbarkeitsinformation der Einsatzbereich vorliegt.

3. Verfahren nach einem der vorangehenden Ansprüche,
**dadurch gekennzeichnet,**
**dass** die Empfehlungsinformation wenigstens eine einen Empfehlungsgrad beschreibende Empfehlungsstufe umfasst, in deren Abhängigkeit die Ausgabe der Aktivierungsempfehlung angepasst wird, insbesondere unterschiedlichen Stufen jeweils unterschiedliche zweite Ausgabeelemente und/oder Ausgabesteuerparameter zugeordnet sind.

4. Verfahren nach Anspruch 3,
**dadurch gekennzeichnet,**
**dass** einer aufgrund einer fahrerbezogenen Eignung eines Streckenabschnitts ermittelten, streckenabschnittsbezogenen Aktivierungsempfehlung ein geringerer Empfehlungsgrad zugeordnet wird als einer auf eine aktuelle Tätigkeit und/oder einer auf einen aktuellen Zustand des Fahrers bezogenen aktualitätsbezogenen Aktivierungsempfehlung.

5. Verfahren nach einem der vorangehenden Ansprüche,
**dadurch gekennzeichnet,**
**dass** die Anzeige einer, insbesondere aktualitätsbezogenen, Aktivierungsempfehlung wenigstens zu Beginn eines Streckenabschnitts, auf den sie bezogen ist, erfolgt.

6. Verfahren nach Anspruch 5,
**dadurch gekennzeichnet,**
**dass** die Anzeige einer, insbesondere aktualitätsbezogenen, Aktivierungsempfehlung begrenzt auf einen vorbestimmten Zeitraum, insbesondere 5 s, ausgegeben wird und/oder das zweite Ausgabeelement (12, 13) ein akustisches Ausgabemittel (13) umfasst, über das die, insbesondere aktualitätsbezogene, Aktivierungsempfehlung akustisch ausgegeben wird.

7. Verfahren nach Anspruch 6,
**dadurch gekennzeichnet,**
**dass** bei einer akustischen Ausgabe eine Antwort des Fahrers mit einem Aufnahmemittel (8) erfasst und zur Ableitung einer Steuerinformation für das Autopilotsystem (2), insbesondere zum Aktivieren oder Deaktivieren des Autopilotsystems (2), verwendet wird.

8. Verfahren nach einem der vorangehenden Ansprüche,
**dadurch gekennzeichnet,**
**dass** bei einer keine Aktivierbarkeit anzeigenden Aktivierbarkeitsinformation, aber einer eine Aktivierungsempfehlung anzeigenden Empfehlungsinformation durch Auswertung der Betriebssituation überprüft wird, ob wenigstens ein empfehlbarer Fahreingriff des Fahrers zur Herstellung der Aktivierbarkeit führt, wobei bei ermittelbarem Fahreingriff eine diese beschreibende Fahrerinformation über das zweite Ausgabeelement (12, 13) und/oder ein weiteres Ausgabeelement (11, 12, 13) ausgegeben wird.

9. Verfahren nach Anspruch 8,
**dadurch gekennzeichnet,**
**dass** der wenigstens eine Fahreingriff einen Spurwechsel und/oder den Wechsel einer Straßenklasse und/oder eine Geschwindigkeitsreduzierung betrifft, wobei insbesondere im Fall eines Straßenklassenwechsels mittels eines Navigationssystems (3) des Kraftfahrzeugs (1) eine die Ziel-Straßenklasse umfassende Route ermittelt und empfohlen wird.

10. Verfahren nach einem der vorangehenden Ansprüche,
**dadurch gekennzeichnet,**
**dass** die Empfehlungsinformation eine den Grund für eine Aktivierungsempfehlung beschreibende Hintergrundinformation umfassend ermittelt wird und die Hintergrundinformation mit der jeweiligen Empfehlung ausgegeben wird.

11. Verfahren nach einem der vorangehenden Ansprüche,
**dadurch gekennzeichnet,**
**dass** die Empfehlungsinformation durch Auswertung von das Fahrerverhalten in der Vergangenheit beschreibenden Historiendaten und/oder von aktuell durchgeführten oder durchzuführenden Tätigkeiten des Fahrers beschreibenden Tätigkeitsdaten und/oder von eine aktuelle Ablenkung und/oder Aufmerksamkeit des Fahrers beschreibenden Aufmerksamkeitsdaten ermittelt wird.

12. Verfahren nach Anspruch 11,
**dadurch gekennzeichnet,**
**dass** eine zu analysierende Betriebssituation wenigstens einer Betriebssituationsklasse zugeordnet wird, für die ein Vorzugsverhalten des Fahrers anzeigende Historiendaten vorliegen, welche zur Ermittlung der Empfehlungsinformation verwendet werden.

13. Verfahren nach Anspruch 11 oder 12,
**dadurch gekennzeichnet,**
**dass** bei eine nicht während der Fahrzeugführung durchzuführende Tätigkeit beschreibenden Tätigkeitsdaten eine Aktivierungsempfehlung erzeugt wird.

14. Verfahren nach einem der Ansprüche 11 bis 13,
**dadurch gekennzeichnet,**
**dass** als die Müdigkeit betreffende Aufmerksamkeitsdaten die Augen des Fahrers zeigende Bilddaten und/oder Daten über die Dauer der aktuellen Fahrt und/oder eine Uhrzeit und/oder Informationen über die Eintönigkeit eines Streckenabschnitts und/oder als die Ablenkung betreffende Aufmerksamkeitsdaten insbesondere mittels eines oder des akustischen Aufnahmemittels (8) ermittelte Informationen über ein geführtes Gespräch des Fahrers verwendet werden.

15. Kraftfahrzeug (1), aufweisend ein zur vollständig automatischen Führung des Kraftfahrzeugs (1) ausgebildetes Autopilotsystem (2), eine Anzeigeeinrichtung (10) mit einem eine Aktivierbarkeit des Autopilotsystems (2) anzeigenden, ersten Ausgabeelement (11) und einem zweiten Ausgabeelement (12, 13) und eine zur Durchführung eines Verfahrens nach einem der vorangehenden Ansprüche ausgebildete Steuereinrichtung (14).

## Claims

1. Method for operating a motor vehicle (1) which has an autopilot system (2) for the completely automatic driving of the motor vehicle (1), regarding which, as a function of a current and/or future operating situation, described by driving situation data and/or operating status data of the motor vehicle (1), and an item of system limits information describing the area of application of the autopilot system (2), an item of technical enabled status information is determined, wherein the motor vehicle (1) comprises furthermore a display apparatus (10) with a first output element (11) displaying the enabled status of the autopilot system (2) according to the technical enabled status information,
**characterised in that**
in addition to the technical enabled status information as a function of the operating situation and preferences with regard to the autopilot system (2) and/or driver data describing the state of the driver with regard to the guidance of the vehicle, a driver-related item of recommendation information is determined, as a function of which a second output element (12, 13) of the display apparatus (10) displaying an enabled status recommendation according to the recommendation information is actuated, wherein the enabled status information and the recommendation information are determined and updated in parallel in a cyclical manner.

2. Method according to claim 1,
**characterised in that**
an enabled status recommendation is displayed only for the route section for which the area of application according to the enabled status information is present.

3. Method according to any one of the preceding claims,
**characterised in that**
the recommendation information comprises at least one recommendation stage describing a degree of recommendation, as a function of which the output of the activation recommendation is adapted, in particular respectively different second output elements and/or output control parameters are assigned to different stages.

4. Method according to claim 3,
**characterised in that**
a lower degree of recommendation is assigned to a route section-related activation recommendation determined on the basis of a driver-related suitability of a route section than to an activation recommendation related to a current activity and/or a current state of the driver.

5. Method according to any of the preceding claims,
**characterised in that**
the display of an activation recommendation, in particular one which regards up-to-dateness, takes place at least at the beginning of a route section to which it relates.

6. Method according to claim 5,
**characterised in that**
the display of an activation recommendation, in particular one which regards up-to-dateness, is outputted so as to be limited to a predetermined time duration, in particular 5 s, and/or the second output element (12, 13) comprises an acoustic output means (13) through which the activation recommendation, in particular one which regards up-to-dateness, is acoustically outputted.

7. Method according to claim 6,
**characterised in that**
in the case of an acoustic output, a response of the driver using a recording means (8) is captured and used for deriving an item of control information for the autopilot system (2), in particular for activating or deactivating the autopilot system (2).

8. Method according to any one of the preceding claims,
**characterised in that**
in the case of an item of enabled status information displaying no enabled status, but in the case of an item of recommendation information displaying an enabled status recommendation, it is verified by evaluating the operating situation whether at least one recommendable driving intervention on the part of the driver results in the enabled status being established, wherein in the case of a driver intervention being able to be determined, an item of driver information describing this is outputted by way of the second output element (12, 13) and/or a further output element (11, 12, 13).

9. Method according to claim 8,
**characterised in that**
the at least one driving intervention relates to a changing lane and/or the change of a road class and/or a speed reduction, wherein in particular in the case of a change of a road class by means of a navigation system (3) of the motor vehicle (1), a route comprising the target road class is determined and recommended.

10. Method according to any of the preceding claims,
**characterised in that**
the recommendation information is determined comprising an item of background information describing the reason for an activation recommendation and the background information is outputted with the respective recommendation.

11. Method according to any of the preceding claims,
**characterised in that**
the recommendation information is determined by evaluating historical data describing the driver behavior in the past and/or activity data describing activities of the driver which are being currently carried out or which are to be carried out and/or alertness data describing a current distraction and/or alertness of the driver.

12. Method according to claim 11,
**characterised in that**
an operating situation which is to be analyzed is assigned to at least one operating situation class for which historical data displaying a preferential behavior of the driver are present, which are used for determining the item of recommendation information.

13. Method according to claim 11 or 12,
**characterised in that**
in the case of activity data describing an activity which is not to be carried out while the vehicle is being driven, an activation recommendation is generated.

14. Method according to any one of claims 11 to 13,
**characterised in that**
image data showing the eyes of the driver and/or data regarding the duration of the current journey and/or a time and/or information regarding the monotony of a route section are used as the alertness data regarding tiredness, and/or information, determined in particular by means of an or the acoustic recording means (8) regarding a conversation carried out by the driver, are used as the alertness data relating to distraction.

15. Motor vehicle (1) having an autopilot system (2) configured for the completely automatic driving of the motor vehicle (1), a display apparatus (10) with a first output element (11) displaying an enabled status of the autopilot system (2) and a second output element (12, 13), and a control apparatus (14) configured to carry out a method according to any of the preceding claims.

## Revendications

1. Procédé de fonctionnement d'un véhicule automobile (1) qui présente un système de pilotage automatique (2) formé pour le guidage complètement automatique du véhicule automobile (1), pour lequel en fonction d'une situation de fonctionnement actuelle et/ou précédente, décrite par des données de situation de conduite et/ou des données d'état de fonctionnement du véhicule automobile (1) et d'une information de limite du système décrivant la plage de fonctionnement du système de pilotage automatique (2), une information de caractère d'activation technique est déterminée, dans lequel le véhicule automobile (1) présente de plus un dispositif d'affichage (10) avec un premier élément de sortie (11) indiquant le caractère d'activation du système de pilotage automatique (2) selon l'information de caractère d'activation technique,
**caractérisé en ce que**
outre l'information de caractère d'activation technique en fonction de la situation de fonctionnement et de préférences relatives au système de pilotage automatique (2) et/ou de données de conducteur décrivant l'état du conducteur relatif à la conduite du véhicule, une information de recommandation liée au conducteur est déterminée, en fonction de laquelle un second élément de sortie (12, 13) indiquant une recommandation d'activation selon l'information de recommandation du dispositif d'affichage (10) est commandé, dans lequel l'information de caractère d'activation et l'information de recommandation sont déterminées et actualisées en parallèle de manière cyclique.

2. Procédé selon la revendication 1,
**caractérisé en ce que**
une recommandation d'activation est indiquée uniquement pour des sections d'itinéraire, pour lesquelles la plage de fonctionnement est présente selon l'information de caractère d'activation.

3. Procédé selon l'une quelconque des revendications précédentes,
**caractérisé en ce que**
l'information de recommandation comprend au moins une étape de recommandation décrivant un degré de recommandation, en fonction de laquelle la sortie de la recommandation d'activation est adaptée, en particulier à différentes étapes sont associés respectivement différents seconds éléments de sortie et/ou paramètres de commande de sortie.

4. Procédé selon la revendication 3,
**caractérisé en ce que**
un degré de recommandation plus faible qu'une recommandation d'activation liée à l'actualité liée à une activité actuelle et/ou à un état actuel du conducteur est associé à une recommandation d'activation liée à la section d'itinéraire, déterminée en raison d'une aptitude liée au conducteur d'une section d'itinéraire.

5. Procédé selon l'une quelconque des revendications précédentes,
**caractérisé en ce que**
l'affichage d'une recommandation d'activation liée à l'actualité en particulier est effectué au moins à un début d'une section d'itinéraire, à laquelle elle est liée.

6. Procédé selon la revendication 5,
**caractérisé en ce que**
l'affichage d'une recommandation d'activation liée à l'actualité en particulier est sorti limité à une période prédéterminée, en particulier à 5 s et/ou le second élément de sortie (12, 13) comprend un moyen de sortie (13) acoustique, par le biais duquel la recommandation d'activation en particulier liée à l'actualité est sortie de manière acoustique.

7. Procédé selon la revendication 6,
**caractérisé en ce que**
lors d'une sortie acoustique, une réponse du conducteur est détectée avec un moyen d'enregistrement (8) et est utilisée pour la déduction d'une information de commande pour le système de pilotage automatique (2), en particulier pour l'activation ou la désactivation du système de pilotage automatique (2).

8. Procédé selon l'une quelconque des revendications précédentes,
**caractérisé en ce que**
pour une information de caractère d'activation n'affichant aucun caractère d'activation mais une information de recommandation affichant une recommandation d'activation, il est vérifié par évaluation de la situation de fonctionnement si au moins une intervention du conducteur recommandable du conducteur mène à l'établissement du caractère d'activation, dans lequel pour l'intervention du conducteur pouvant être déterminée, une information de conducteur décrivant celle-ci est sortie par le biais du second élément de sortie (12, 13) et/ou d'un autre élément de sortie (11, 12, 13).

9. Procédé selon la revendication 8,
**caractérisé en ce que**
l'au moins une intervention du conducteur concerne un changement de voie et/ou le changement d'un type de route et/ou une réduction de vitesse, dans lequel en particulier dans le cas d'un changement de type de route au moyen d'un système de navigation (3) du véhicule automobile (1), une route comprenant le type de route cible est déterminée et recommandée.

10. Procédé selon l'une quelconque des revendications précédentes,
**caractérisé en ce que**
l'information de recommandation est déterminée comprenant une information de contexte décrivant la raison pour une recommandation d'activation et l'information de contexte est sortie avec la recommandation respective.

11. Procédé selon l'une quelconque des revendications précédentes,
**caractérisé en ce que**
l'information de recommandation est déterminée par évaluation des données d'historique décrivant le comportement du conducteur dans le passé et/ou des données d'activité décrivant des activités du conducteur réalisées ou à réaliser actuellement et/ou des données d'attention décrivant une déviation actuelle et/ou une attention du conducteur.

12. Procédé selon la revendication 11,
**caractérisé en ce que**
une situation de fonctionnement à analyser est associée à au moins une classe de situation de fonctionnement, pour laquelle des données d'historique affichant un comportement de préférence du conducteur sont présentes, lesquelles sont utilisées pour la détermination de l'information de recommandation.

13. Procédé selon la revendication 11 ou 12,
**caractérisé en ce que**
pour des données d'activité ne décrivant pas une activité à réaliser pendant la conduite du véhicule, une recommandation d'activation est générée.

14. Procédé selon l'une quelconque des revendications 11 à 13,
**caractérisé en ce que**
comme données d'attention concernant la fatigue, les données d'image montrant des yeux du conducteur et/ou des données sur la durée du trajet actuel et/ou un horaire et/ou des informations sur la monotonie d'une section d'itinéraire et/ou comme données d'attention concernant la déviation, des informations sur une conversation menée du conducteur déterminées en particulier au moyen d'un ou du moyen d'enregistrement (8) acoustique sont utilisées.

15. Véhicule automobile (1) présentant un système de pilotage automatique (2) formé pour la conduite complètement automatique du véhicule automobile (1), un dispositif d'affichage (10) avec un premier élément de sortie (11) affichant un caractère d'activation du système de pilotage automatique (2) et un second élément de sortie (12, 13) et un dispositif de commande (14) formé pour la mise en oeuvre d'un procédé selon l'une quelconque des revendications précédentes.
